# EUROPEAN PATENT APPLICATION

(11) **EP 3 578 806 A1**
(43) Date of publication of application: **11.12.2019**
(21) Application number: 18175790.7
(22) Date of filing: 04.06.2018
(51) Int. Cl.: F03D 1/06, F03D 80/50

(54) **METHOD FOR REPAIRING A LEADING EDGE OF WIND TURBINE BLADE**

(71) Applicant: Siemens Gamesa Renewable Energy A/S, 7330 Brande (DK)
(72) Inventor: Leong, Martin, 8830 Tjele (DK); Nickelsen, Peder Riis, 7480 Vildbjerg (DK)
(74) Representative: Aspacher, Karl-Georg

(57) **Abstract**

A method for repairing a leading edge of wind turbine blade in presented. In the method an adhesive is applied to an eroded surface of the leading edge of the wind turbine blade for substantially re-establishing geometry of the leading edge of the wind turbine blade. Thereafter, a leading edge protective shell is applied on the leading edge such that the leading edge protective shell adheres to the eroded surface with only the adhesive between the eroded surface and the leading edge protective shell, wherein a shape of the leading edge protective shell corresponds to aerodynamic outer profile of the leading edge. Preferably, a two component modified-silane polymer adhesive is used to mount a soft polymer leading edge protective shell.

## Description

The present invention relates generally to repairing of wind turbine components, and in particular, to methods for repairing a leading edge of wind turbine blade.

Nowadays several wind turbine components such as blades are made of fibre reinforced plastic composite materials. Erosion of the surface of the components and particularly of the leading edge of such wind turbine rotor blades is known to occur in operation. Erosion of the leading edge of a turbine blade may reduce the efficiency of the blade and thus the power output by the turbine.

Wind turbine rotor blades, both of offshore wind turbines and onshore wind turbines, are specially affected by wear which occurs when the blades are impacted by particles or droplets in the ambient wind resulting in degradation of the leading edge of the wind turbine rotor blade. The particles and droplets are present in the ambient wind and originate from dust, rain, snow-fall, etc and cause erosion of the leading edge of wind turbine blades by impingement wear resulting into reduction of the blade aerodynamic efficiency and thus the maximum output power of the wind turbine.

Erosion on a turbine blade may penetrate into the structural fibre reinforced laminate leading to severe failure of the turbine blade requiring repair which can be very costly to turbine operators and may involve considerable downtime for the affected wind turbine requiring dismantling and transportation of the affected component to a repair workshop.

This is why generally a surface system is foreseen on the leading edge of wind turbine rotor blades of onshore and offshore wind turbines.

Repair procedures typically include a re-establishment of the leading edge surface, i.e. reforming the aerodynamic shape of the leading edge by using filler material. After the leading edge surface is repaired using the filler, a protective shell or shield made of a polymer material is attached to the leading edge of the wind turbine blade. The protective shell is intended to obviate erosion of the blade shell and suffer the erosion instead. However, the process of re-establishing the leading edge is performed by conventional repair methods needing hand lamination for the laminate damage, and application of filler and paint for the top coat system. This rebuilding of laminate and top coat can be very costly, as it typically entails several curing cycles of the repair materials, meaning a lot of turbine downtime and man power needed for the work.

The object of the present invention is thus to provide a repair method for leading edge of wind turbine blade that can be performed on-site of wind turbine installation, that is precise and thus does not require re-establishment of leading edge before putting on the protective shell.

The abovementioned objects are achieved by a method for repairing leading edge of a wind turbine blade according to claim 1 of the present technique. Advantageous embodiments of the present technique are provided in dependent claims.

In the present technique, a method for repairing a leading edge of a wind turbine blade is presented. The method is preferably performed at the wind turbine installation site without dismantling any of the components of the wind turbine. In the method an adhesive is applied to an eroded surface of the leading edge of the wind turbine blade for substantially re-establishing geometry of the leading edge of the wind turbine blade. Thereafter, a leading edge protective shell is applied on the leading edge such that the leading edge protective shell adheres to the eroded surface with only the adhesive between the eroded surface and the leading edge protective shell, wherein a shape of the leading edge protective shell corresponds to aerodynamic outer profile of the leading edge. Preferably, a two component modified-silane polymer adhesive is used to mount a soft polymer leading edge protective shell.

The aforementioned method according to the present technique has several advantages. First, it is simple, time saving and cost effective as before application of adhesive reestablishment of the leading edge by laminates and filler materials is not required. The adhesive has a two-fold function. Firstly the adhesive acts as the filler for roughly re-establishing the geometry of the leading edge i.e. recesses or indentations formed on the leading edge surface as a result of the erosion are filled up by the adhesive, and secondly the adhesive acts as an adhesion agent between the leading edge surface and the protective shell. The shape of the damaged surface is not required to be completely restored to aerodynamic shape as this function of the leading edge is restored by the protective shell which has the pre-formed aerodynamic shape and which further adapts to the shape of the leading edge after being mounted on the leading edge. Furthermore, since the method is simple and thus can be performed at the installation site of the wind turbine without dismantling the wind turbine the method saves the down time of the wind turbine.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: schematically depicts a wind turbine having a wind turbine rotor blade to which a method for repairing according to the present technique is applied at the site of installation of the wind turbine and without removal of the component to be repaired from the wind turbine;
- FIG 2: schematically depicts the wind turbine rotor blade to which a method for repairing according to the present technique is applied;
- FIG 3: schematically depicts a cross-section of the wind turbine blade showing the leading edge geometry of an undamaged blade;
- FIG 4: schematically depicts a cross-section of the wind turbine blade showing an eroded surface on the leading edge of the wind turbine blade;
- FIG 5: schematically depicts a cross-section of the wind turbine blade of FIG 4 to which an adhesive has been applied to substantially re-establish the geometry of the blade;
- FIG 6: schematically depicts a leading edge protective shell used in the method of the present technique; and
- FIG 7: schematically depicts a repaired leading edge by the method of the present technique;

Hereinafter, above-mentioned and other features of the present technique are described in details. Various embodiments are described with reference to the drawing, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

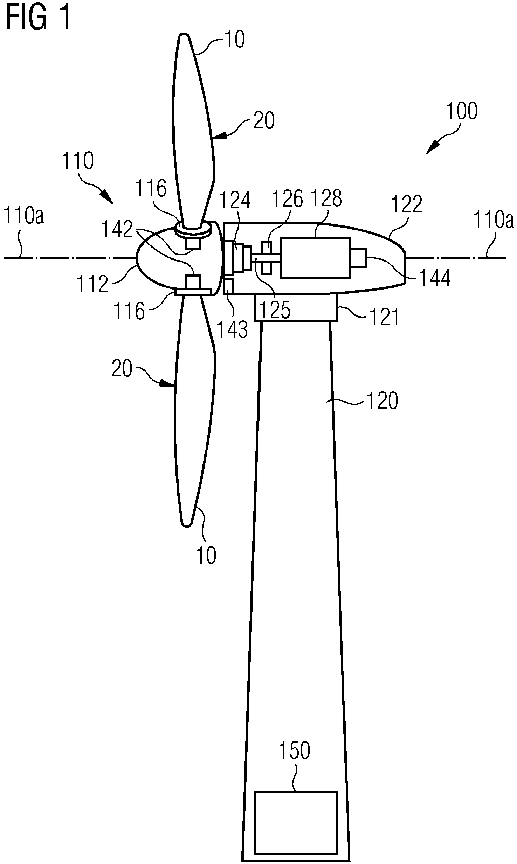

FIG 1 shows an exemplary embodiment of a wind turbine 100 of the present technique. The wind turbine 100 includes a tower 120, which is mounted on a fundament (not shown). A nacelle 122 is mounted on top of the tower 120 and rotatable with regard to the tower 120 by means of a yaw angle adjustment mechanism 121 such as yaw bearings and yaw motors. The yaw angle adjustment mechanism 121 functions to rotate the nacelle 122 around a vertical axis (not shown) referred to as a yaw axis, which is aligned with the longitudinal extension of the tower 120. The yaw angle adjustment mechanism 121 rotates the nacelle 122 during operation of the wind turbine 100 to ensure that the nacelle 122 is appropriately aligned with the current wind direction to which the wind turbine 100 is subjected.

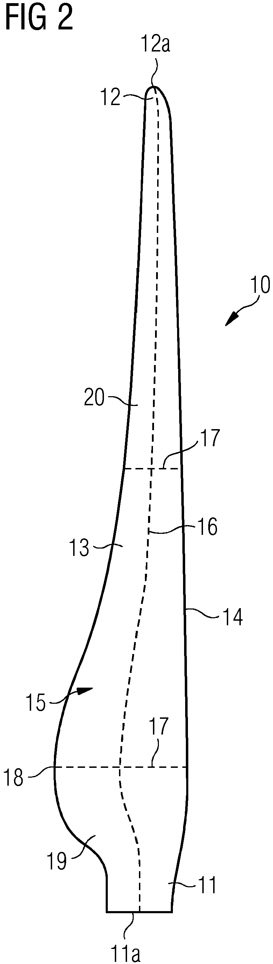

The wind turbine 100 further includes a rotor 110 having at least a rotor blade 10, and generally three rotor blades 10, although in the perspective view of FIG 1 only two rotor blades 10 are visible. One of the rotor blades 10 is schematically depicted in FIG 2. The rotor 110 is rotatable around a rotational axis 110a. The rotor blades 10, hereinafter also referred to as the blades 10 or as the blade 10 when referring to one of the blades 10, are generally mounted at a driving collar 112, also referred to as a hub 112. The hub 112 is mounted rotatable with regard to the nacelle 122 by means of a main bearing (not shown). The hub 112 is rotatable about the rotational axis 110a. Each of the blades 10 extends radially with respect to the rotational axis 110a and has an airfoil section 20.

In between the hub 112 and each of the rotor blades 10, is provided a blade adjustment mechanism 116 in order to adjust the blade pitch angle of the blade 10 by rotating the respective blade 10 about a longitudinal axis (not shown) of the blade 10. The longitudinal axis of each of the blade 10 is aligned substantially parallel with the longitudinal extension of the respective blade 10. The blade adjustment mechanism 116 functions to adjust blade pitch angles of the respective blade 10.

The wind turbine 100 includes a main shaft 125 that rotatably couples the rotor 110, particularly the hub 112, to a generator 128 housed within the nacelle 122. The hub 112 is connected to a rotor of the generator 128. In an exemplary embodiment (not shown) of the wind turbine 100, the hub 112 is connected directly to the rotor of the generator 128, thus the wind turbine 100 is referred to as a gearless, direct drive wind turbine 100. As an alternative, as shown in the exemplary embodiment of FIG 1, the wind turbine 100 includes a gear box 124 provided within the nacelle 122 and the main shaft 125 connects the hub 112 to the generator 128 via the gear box 124, thereby the wind turbine 100 is referred to as a geared wind turbine 100. Furthermore, a brake 126 is provided in order to stop the operation of the wind turbine 100 for example when the repair method of the present technique is being applied to the wind turbine or to reduce the rotational speed of the rotor 110 for instance in case of a very strong wind and/or in case of an emergency.

The wind turbine 100 further includes a control system 150 for operating the wind turbine 100 at desired operational parameters. The wind turbine 100 may further include different sensors for example a rotational speed sensor 143, a power sensor 144, angle sensors 142, etc that provide inputs to the control mechanism 150 or other components of the wind turbine 100 to optimize operation of the wind turbine 100.

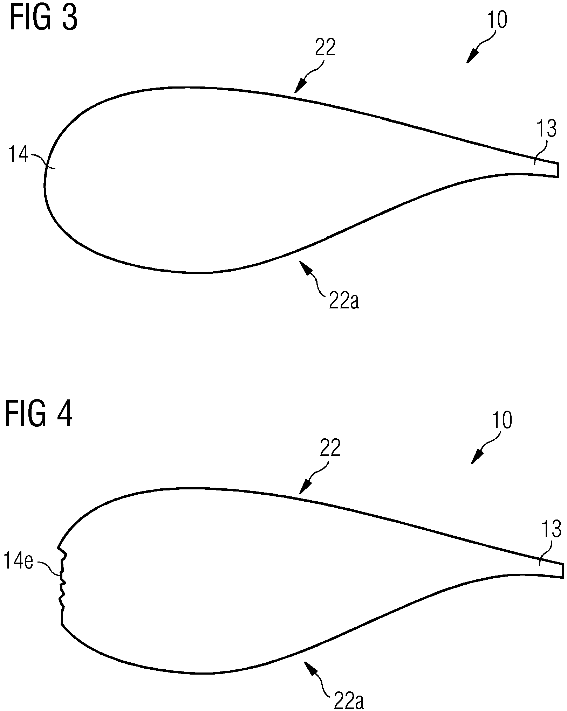

Furthermore as shown in FIG 2, the rotor blade 10 includes a root section 11 having a root 11a and an airfoil section 20. Generally, the rotor blade 10 includes a transition section 90 in between the root section 11 and the airfoil section 20. The rotor blade 10 has a shoulder 18 that is a section of the rotor blade 10 where the chord line 17 has maximum chord length, i.e. in example of FIG 2 at the chord line 17 that is depicted towards the root 11a. The airfoil section 20, hereinafter also referred to as the airfoil 20, includes a tip section 12 having a tip 12a. The root 11a and the tip 12a are separated by a span 16, of the rotor blade 10, which follows the shape of the rotor blade 10. As shown in FIGs 2 and 3, the rotor blade 10 includes a leading edge 14 and a trailing edge 13.

In the wind turbine 100, the blade 10 includes a blade shell 22 that forms the outer surface of the blade 10. The blade 10 of the wind turbine 100 may have a 'butterfly blade' construction having leeward and windward shells that are separately manufactured and then joined together to form the blade 10, or may have the well known 'integral blade' construction of Siemens, where unlike butterfly blade construction the leeward and windward shells are not separately manufactured. In the integral blade construction the entire shell is manufactured in one-part as an integral shell and thus does not have a separately manufactured leeward and windward side. The shell has a surface 22a which is exposed to the outside environment.

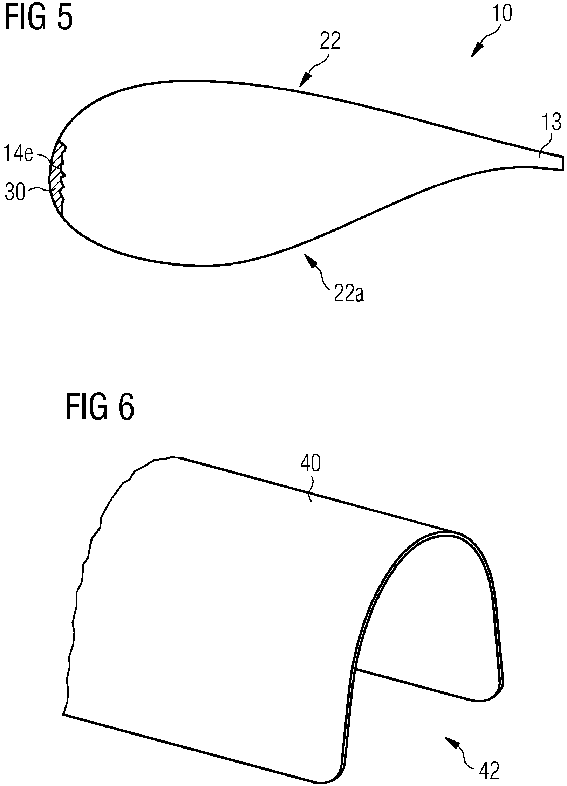

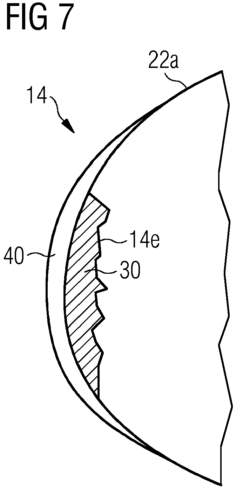

FIG 4 schematically represents the leading edge 14 having an eroded surface 14e i.e. a region of the leading edge 14 that has been damaged or eroded. As shown in FIG 5, in the method of the present technique for repairing the leading edge 14, an adhesive 30 is applied to the eroded surface 14e, and preferably extending to an area around the eroded surface 14e on the surface 22a of the shell 22. At this stage the adhesive 30 acts as filler and fills in indentations or recesses formed as a result of the erosion. The adhesive 30 fills in the eroded surface 14e at the leading edge 14 and thus a substantial geometry of the leading edge 14 is re-established i.e. in other words the leading edge 14 is shaped roughly similar to an unjagged state. Thereafter, a leading edge protective shell 40, as shown in FIG 6, is applied on the leading edge 14 having the previously applied adhesive 30. A shape of the leading edge protective shell 40 corresponds to aerodynamic outer profile of the leading edge 14, or in other words a outer shape of the leading edge protective shell 40 is aerodynamic and corresponds to the shape of the leading edge 14 in undamaged state for example the shape shown in FIG 3. As shown in FIG 7, the adhesive 30 adheres to an inner surface 42 (shown in FIG 6) of the leading edge protective shell 40 and to the eroded surface 14e of the leading edge 14 and after curing holds the leading edge protective shell 40 onto the leading edge 14 of the wind turbine blade 10. It may be noted that the leading edge protective shell 40 adheres to the eroded surface 14e with only the adhesive 30 between the eroded surface 14e and the leading edge protective shell 40, or in other words no other filler material is present in-between the eroded surface 14e and the leading edge protective shell 40.

Any suitable adhesive which is compatible with the material of the leading edge protective shell 40 and which can acts as both as a filler and an adhesive may be used in the present technique. In an embodiment of the present technique, the adhesive 30 used in the method is a modified-silane polymer (MS polymer), preferably a two component MS polymer material. The leading edge protective shell 40 used in the method is a soft polymer shell, for example a shell comprising polyurethane, which has a pre-formed aerodynamic shape however which is flexible to be mounted on the leading edge 14 of the wind turbine blade 10.

While the present technique has been described in detail with reference to certain embodiments, it should be appreciated that the present technique is not limited to those precise embodiments.

## Claims

1. A method (1) for repairing a leading edge (14) of a wind turbine blade (10), the method (1) comprising:
- applying an adhesive (30) to an eroded surface (14e) of the leading edge (14) of the wind turbine blade (10) for substantially re-establishing a geometry of the leading edge (14) of the wind turbine blade (10); and
- applying a leading edge protective shell (40) on the leading edge (14) such that the leading edge protective shell (40) adheres to the eroded surface (14e) with only the adhesive (30) between the eroded surface (14e) and the leading edge protective shell (40), wherein a shape of the leading edge protective shell (40) corresponds to aerodynamic outer profile of the leading edge (14).

2. The method (1) according to claim 1, wherein the adhesive (30) is a modified-silane polymer.

3. The method (1) according to claim 2, wherein the modified-silane polymer is a two component adhesive.

4. The method (1) according to any of claim 1 to 3, wherein the protective shell is a soft polymer shell.

5. The method (1) according to claim 4, wherein the polymer comprises polyurethane.

6. The method (1) according to any of claim 1 or 5, wherein the method is performed on-site of installation of the wind turbine.
